# EUROPÄISCHE PATENTANMELDUNG

(11) **EP 2 322 402 A1**
(43) Veröffentlichungstag der Anmeldung: **18.05.2011**
(21) Anmeldenummer: 10008502.6
(22) Anmeldetag: 14.08.2010
(51) Int. Cl.: B61F 5/38

(54) **Anordnung zur Detektierung von Gleisbögen**

(30) Priorität: 12.11.2009 DE 102009054143
(71) Anmelder: Vossloh Locomotives GmbH, 24159 Kiel (DE)
(72) Erfinder: Völler, Sebastian, 24250 Löptin (DE)
(74) Vertreter: Hansmann, Dierk

(57) **Zusammenfassung**

Zur Detektierung von Gleisbögen zur Nachführung von Fahrwerken für Lokomotiven (1) ist vorgesehen, in Fahrtrichtung der Lokomotive (1) angeordnete Sensoren zur Vorauserfassung von Schienensträngen vorzusehen. Bei einer Abweichung von einem geraden Schienenstrang wird zur Radiendetektierung über Übertragungselemente eine Recheneinheit (11) mit Signalen versorgt. Die Rechneneinheit (11) wird mit Daten des Fahrwerkes und aktueller Statusdaten, wie Geschwindigkeit, versorgt, wobei ein Steuersignal für Stellelemente (6,7) zur Einstellung/Verstellung von Achsen des Fahrwerkes (4) oder des Drehgestelles generierbar sind.

## Beschreibung

Die Erfindung bezieht sich auf eine Anordnung zur Detektierung von Gleisbögen zur Nachführung von Fahrwerken für Lokomotiven für eine Einstellung beweglicher Radsätze und Drehgestelle in Bezug auf einen Bogenradius eines Gleisverlaufes unter Verwendung von Sensoren und Recheneinheiten zur Ansteuerung von Stellelementen für eine Auslenkung der Radsätze bzw. Verstellung der Drehgestelle.

Es besteht bei Fahrwerken für Lokomotiven die Problematik, daß starre Achsen ohne Differential angeordnet sind und somit die Differenz des zurückzulegenden Weges des kurvenaußen- und kurveninnenliegenden Rades durch die Rollradiendifferenz ausgeglichen werden muß. Da diese nicht variabel ist, sondern durch die Konzität der Räder bestimmt wird, gibt es nur einen Bogenradius, in dem die Rollradiendifferenz bei maximal möglicher Querverschiebung - anlaufen des Spurkranzes - optimal ist. Hat der zu befahrende Bogen einen kleinen Radius, so muß die Differenz durch Schlupf ausgeglichen werden. Dieser Effekt hat zur Folge, daß ein passives Lenken in engen Bögen nicht möglich ist, da sich der Radsatz durch die auftretenden Kräfte nicht radial einstellen wird. Im Extremfall kann sogar ein Lenken zur Kurvenaußenseite auftreten, was den Verschleiß weiter erhöhen würde. Hierfür ist eine aktive Lenkung erforderlich.

Eine verbreitete Methode zum Gewinnen von Informationen über den Bogenradius des Gleisverlaufes und eine vorhandene Gleisüberhöhung ist die Verwendung von Gyroskopen und Beschleunigungsaufnehmern. Durch das Messen der auftretenden Beschleunigungen und das Kippen der Lokomotive bei Gleisüberhöhungen wird der Verlauf des aktuell befahrenen Gleises errechnet. Ein Mangel dieser Methode ist, daß eine Ansteuerung des Fahrwerks erst nach dem Auftreten der ersten Kräfte bei einer Kurveneinfahrt erfolgt. In langen Personenzügen macht dieses System Sinn, da es für eine Komfortsteigerung durch Neigetechnik und nicht zur Verschleißoptimierung des Fahrwerks eingesetzt wird. Die vom Triebfahrzeug ermittelten Daten können zur Ansteuerung des relativ langen Zuges verwendet werden. Im Fall einer mehrachsigen Lokomotive kann mit diesem System eine Verschleißminimierung erreicht werden, jedoch nicht bereits zum Zeitpunkt der Kurveneinfahrt.

Aufgabe der Erfindung ist es, durch eine einfache Anordnung witterungsabhängig einen Gleisverlauf zu erfassen und das Fahrwerk entsprechend durch aktive Stellbewegungen an vorliegende Bodenradien anzupassen.

Die Lösung dieser Aufgabe besteht erfindungsgemäß darin, daß in Fahrtrichtung der Lokomotive angeordnete Sensoren zur Vorauserfassung von Schienensträngen vorgesehen sind und eine Abweichung von einem geraden Schienenstrang zur Radiendetektierung über Übertragungselemente einer Recheneinheit zuführbar sind, wobei die Recheneinheit Daten des Fahrwerkes und aktueller Statusdaten, wie Geschwindigkeit, berücksichtigt sowie über ein Steuersignal eines Steuerblocks Stellelemente zur Einstellung/Verstellung von Achsen des Fahrwerkes oder des Drehgestelles generierbar sind.

Hierdurch ist es möglich, Stellglieder über Steuersignale anzusteuern, um eine optimale Einstellung der Fahrwerke schon vor Kurveneinfahrt durchzuführen.

Es wird ferner erfindungsgemäß vorgeschlagen, daß Sensoren auf elektromagnetischer Basis als Ultraschallsensoren und/oder PMD-Sensoren einsetzbar sind.

Alternativ ist vorgesehen, daß Sensoren auf optischer Basis als CCD-Kameras einsetzbar sind.

Eine vorteilhafte Anordnung wird dadurch geschaffen, daß eine Stereoanordnung von Sensoren angeordnet ist.

In der Zeichnung ist ein Ausführungsbeispiel der Erfindung schematisch dargestellt. Es zeigen:

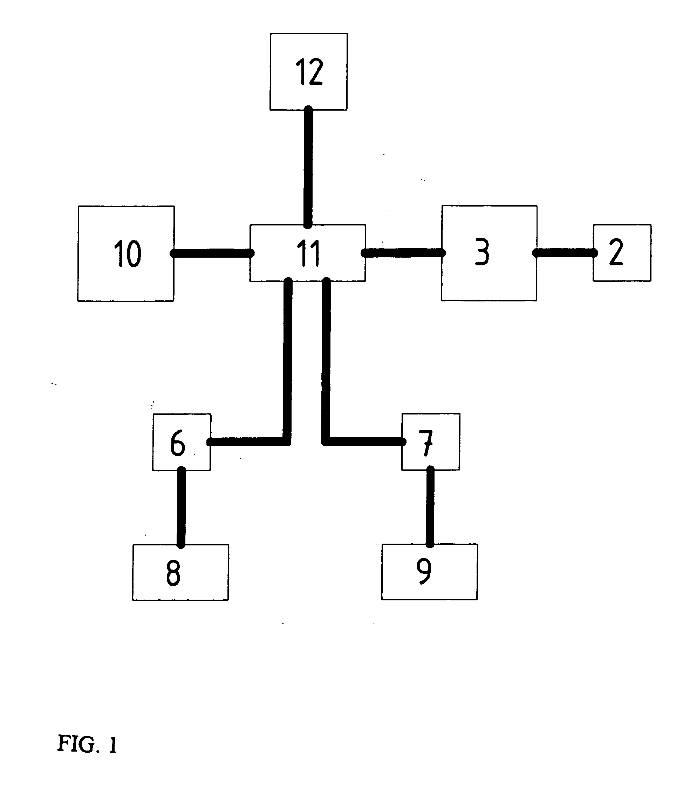

- Fig. 1: ein Blockschaltbild einer Anordnung für bewegliche Radsätze;

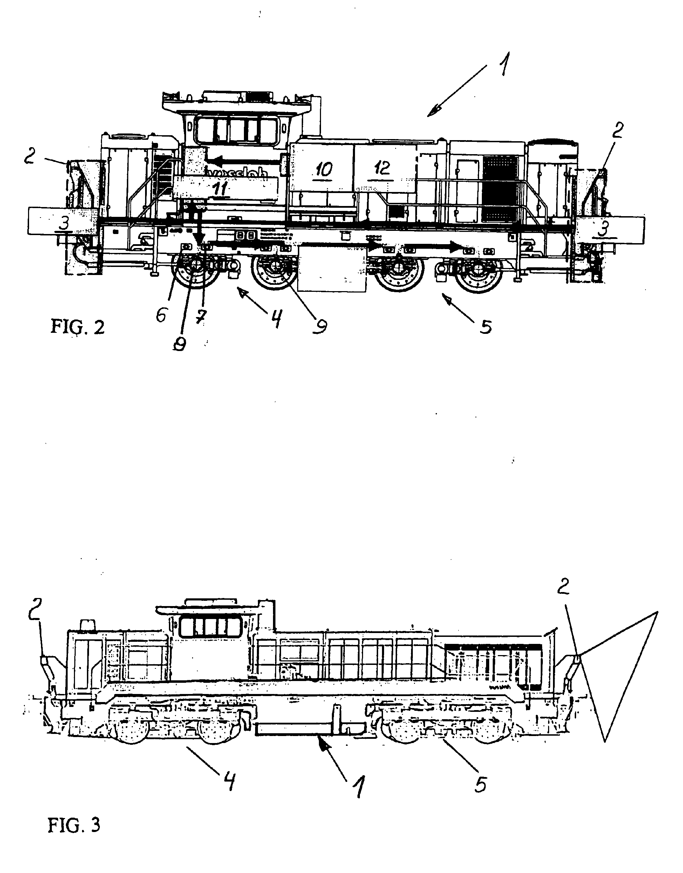

- Fig. 2: einen Signallaufplan einer Gleisbogendetektierung und
- Fig. 3: eine Anordnung eines Sensors mit Abstrahlfeld.

Bei einer vorliegenden Anordnung ist in beiden Fahrtrichtungen einer Lokomotive 1 ein optischer Sensor 2 in Form einer Kamera im Frontbereich angeordnet und auf einen Schienenstrang gerichtet. Zweckmäßigerweise ist hierbei jedem Schienenstrang ein Sensor 2 zugeordnet. Moderne Sensoren 2 liefern 25 Bilder pro Sekunde, d.h. alle 40 ms kann das System der Lokomotive 1 mit neuen Informationen versorgt werden. Bei niedrigen Geschwindigkeiten wird eine maximale Geschwindigkeit der Lokomotive 1 von 10 m/s angenommen, d.h. es werden in 40 ms 40 cm Strecke zurückgelegt. Nach der aufgenommenen Information in Form eines Bildes wird dieses über Umsetzer 3 an eine Rechnereinheit 11 weitergegeben. Die Verarbeitungszeit eines Bildes bis zur Ausgabe eines Steuersignals an ein Fahrwerk 4 mit zugeordneten Stellelementen 6 beträgt etwa 300 ms.

Zur Sicherheit sollte die Auswertung immer auf mehr als einem Bild beruhen. Dies ist auch nötig, um einer geeigneten Software der Rechnereinheit 11 das Eliminieren von Störfaktoren wie Regentropfen oder ungünstigen Reflexionen zu ermöglichen. Es kann daher davon ausgegangen werden, daß von der Erfassung der Gleisstränge - 2 bis 3 Bilder - bis zur Ausgabe des Steuersignals ein Zeitraum von 0,5 sec nötig ist. Hierzu kommt die Zeit, die eine aktive Verschiebung oder Lenkung von Achsen 8, 9 über die Stellelemente 6, 7 benötigt. Wird die Stellgeschwindigkeit über Hydraulikzylinder als Stellelemente 6, 7 von etwa 0,2 m/s und ein maximal benötigter Hub von 100mm zugrunde gelegt, ergibt sich eine Zeitdauer von 0,5 Sekunden zum Einstellen des Fahrwerkes 4. Daraus ergibt sich eine nötige Mindestreichweite des Sensors 2 von ca. 10 Metern bei einer Geschwindigkeit von 36 km/h bzw. 10 m/s. Hieraus resultiert eine Berechnung für die verschiedenen Geschwindigkeiten und die dazugehörigen Mindestreichweiten der Detektierung sowie ein Signallaufschema für das System.

Für eine derartige Anordnung ist es selbstverständlich erforderlich, über eine Eingabeeinheit 10 die Rechnereinheit 11 mit spezifischen Daten des Fahrwerkes 4, 5, wie Achsabstand, Stellwege und daraus resultierende Bogenradien sowie über eine Einheit 12 Statusdaten, wie die Geschwindigkeit, zu übermitteln.

## Patentansprüche

1. Anordnung zur Detektierung von Gleisbögen zur Nachführung von Fahrwerken für Lokomotiven für eine Einstellung beweglicher Radsätze und Drehgestelle in Bezug auf einen Bogenradius eines Gleisverlaufes unter Verwendung von Sensoren und Recheneinheiten zur Ansteuerung von Stellelementen für eine Auslenkung der Radsätze bzw. Verstellung der Drehgestelle, **dadurch gekennzeichnet, daß** in Fahrtrichtung der Lokomotive (1) angeordnete Sensoren (2) zur Vorauserfassung von Schienensträngen vorgesehen sind und eine Abweichung von einem geraden Schienenstrang zur Radiendetektierung über Übertragungselemente (3) einer Recheneinheit (11) zuführbar sind, wobei die Recheneinheit (11) Daten des Fahrwerkes und aktueller Statusdaten, wie Geschwindigkeit, berücksichtigt sowie über ein Steuersignal Stellelemente (6, 7) zur Einstellung/Verstellung von Achsen (8, 9) des Fahrwerkes (4) oder der Drehgestelle generierbar sind.

2. Anordnung nach Anspruch 1, **dadurch gekennzeichnet, daß** Sensoren (2) auf elektromagnetischer Basis als Ultraschallsensoren und/oder PMD-Sensoren einsetzbar sind.

3. Anordnung nach Anspruch 1, **dadurch gekennzeichnet, daß** Sensoren (2) auf optischer Basis als CCD-Kameras einsetzbar sind.

4. Anordnung nach einem der Ansprüche 1 bis 3, **dadurch gekennzeichnet, daß** eine Stereoanordnung von Sensoren (2) angeordnet ist.
